# EUROPEAN PATENT APPLICATION

(11) **EP 2 001 091 A2**
(43) Date of publication of application: **10.12.2008**
(21) Application number: 08010363.3
(22) Date of filing: 04.06.2008
(51) Int. Cl.: H01R 31/00

(54) **Chain of independently connectable electric connectors**

(30) Priority: 04.06.2007 IT MI20070204 U
(71) Applicant: Messina, Fabrizio, 20030 Senago (MI) (IT); Messina, Renato, 20038 Seregno (MI) (IT)
(72) Inventor: Messina, Fabrizio, 20030 Senago (MI) (IT); Messina, Renato, 20038 Seregno (MI) (IT)
(74) Representative: Premru, Rok

(57) **Abstract**

The invention disclosed is a chain of n independently connectable (1) electric connectors (2a, 2b, ...2n) for independent actuation of a plurality n of solenoid valves (3a, 3b, ... 3n), each electric connectors (2a, 2b, ...2n) having an enclosure (12a, 12b, ...12n), said electric connectors (2a, 2b, ...2n) being connected by n cable sections (4a, 4b, ...4n) and wherein each of the first n-2 connectors (2a, 2b, ...2n-1) has an input (5) for a cable section, said input (5) and said output (6) having substantiall6 and/or generally opposed orientations.

## Description

There is herein disclosed a chain of independently connectable electric connectors for electric wiring of solenoid valves.

The invention disclosed herein finds use, particularly, in dust collector systems for controlling blow tubes of dust collecting filters.

In filter dust collectors, dust particles are retained by filtering materials, such as a fabric, that can have the form of a sleeve or cartridge.

The dust layer that gradually deposits on fabric filters (known as "cake") progressively improves dust retaining capacity but also progressively reduces the performance of the filtering system.

When pressure drop in the dust collector reaches excessive values, then the filter element has to be cleaned.

One method of cleaning the filter element of dust collectors consists in countercurrent air cleaning, possibly in combination with other steps.

In practice, compressed air jets are used to mechanically deform the surface of filter sleeves, and cause the dust deposited on the fabric filter to come off and be removed therefrom.

Then, the dust so removed is collected in special containers or conveyed outside.

For this purpose, an array of nozzles (one for each filter element) received air from a tube, known in the art as blow tube, connected to a compressed-air tank.

Each nozzle is in turn equipped with a solenoid valve for opening and closing the passage of compressed air.

An electronic device (known in the art as "sequencing timer") cyclically and sequentially opens the solenoid valves for periodic cleaning of each filter element.

The above prior art suffers from a few drawbacks.

Particularly, electric wiring between the sequencing timer and the solenoid valves of dust collecting filters is a difficult and time-consuming step.

The object of this invention is to provide a solution to prior art problems and particularly to the above mentioned problem.

This object is fulfilled by a chain of independently connectable electric connectors as defined in claim 1.

Further advantages are achieved by the additional features of the dependent claims.

One possible embodiment of a chain of independently connectable electric connectors as set out in the attached claims, will be described hereafter with reference to the accompanying drawings, in which:

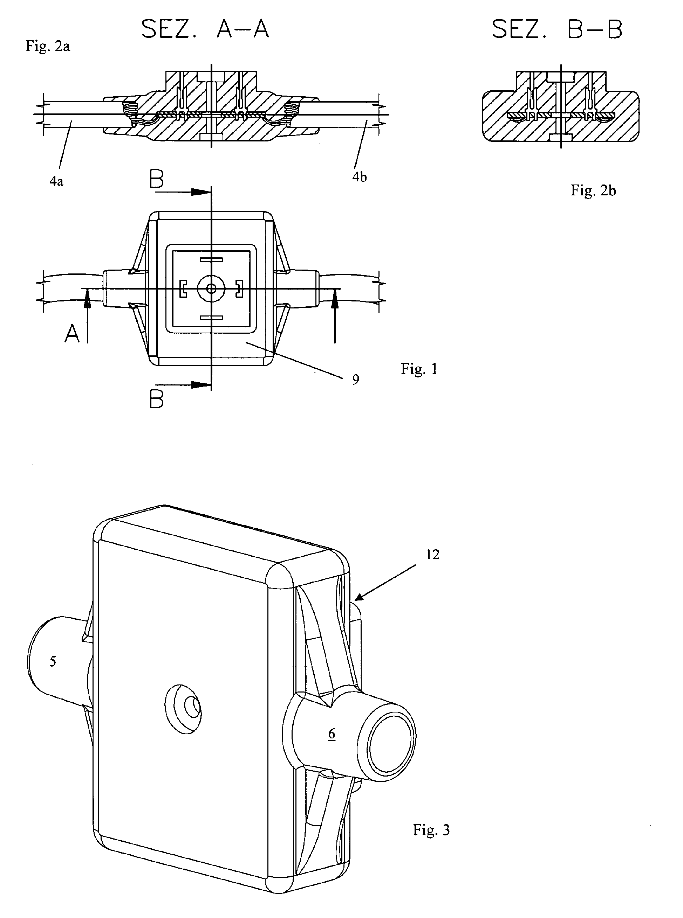

- Figure 1 is a front view of an electric connector;
- Figure 2a is a sectional view of the connector of Figure 1;
- Figure 2b is another sectional view of the connector of Figure 1;
- Figure 3 is a perspective view the connector as shown in Figure 1;

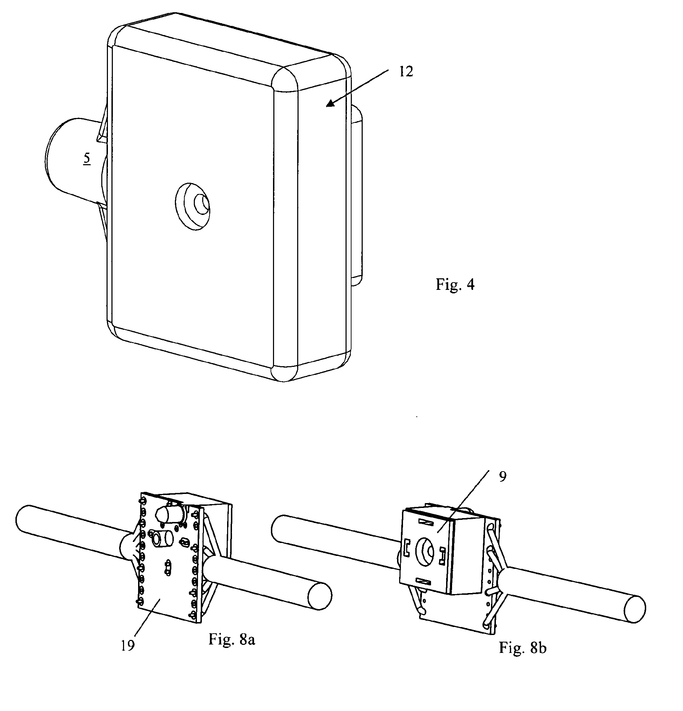

- Figure 4 is a perspective view of a second embodiment of an electric connector;

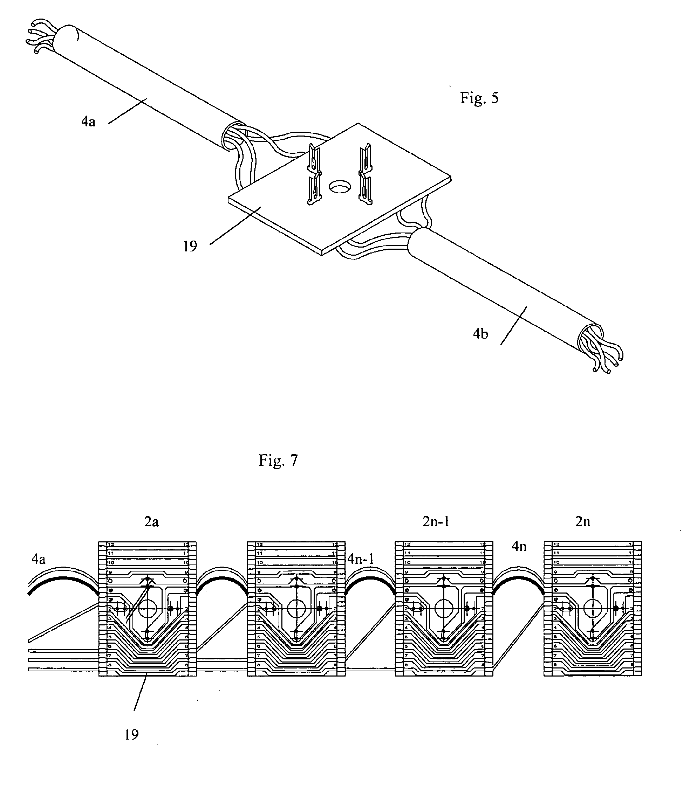

- Figure 5 shows an electric connector without its enclosure and socket;

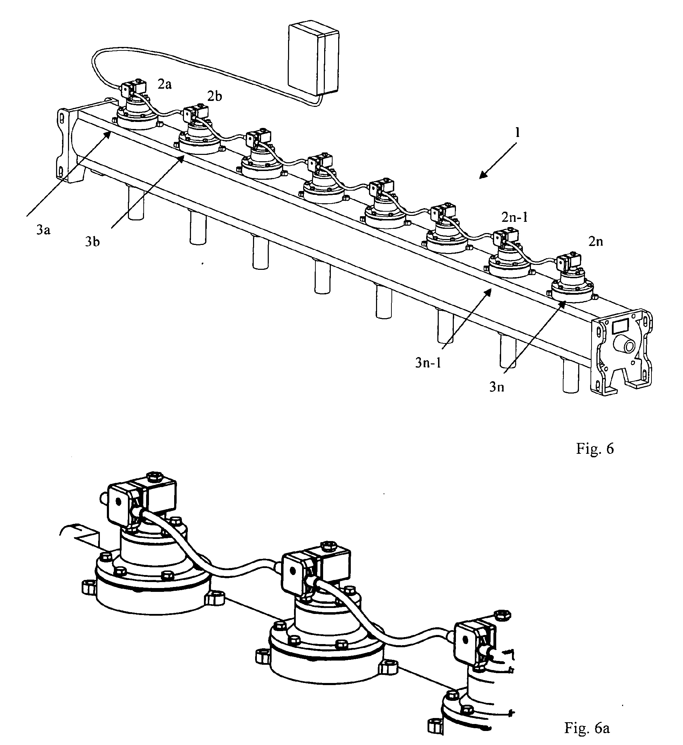

- Figure 6 is a perspective view of an array of electric connectors connected to a dust collecting system;
- Figure 6a is an enlarged view of a detail of Figure 6;
- Figure 7 shows an array of electric connectors without enclosures and a wiring diagram showing the connections of the various connectors;
- Figures 8a and 8b show an electric connector without its enclosure;

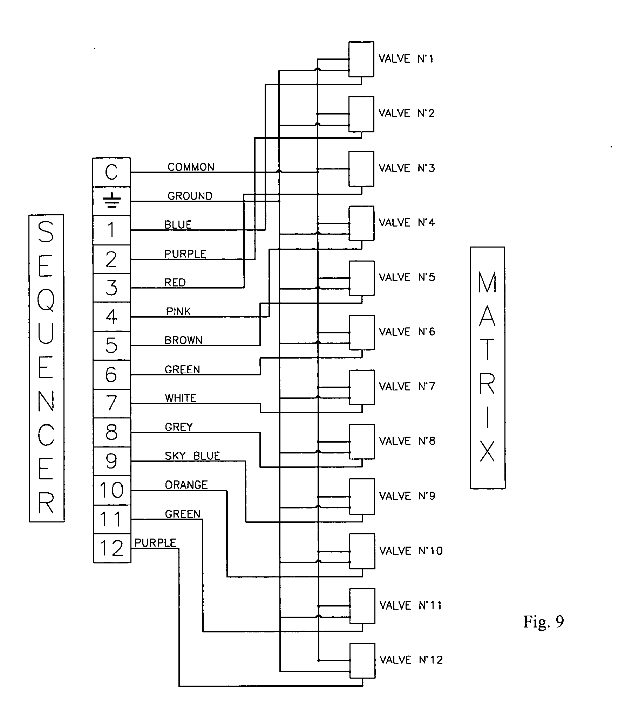

- Figure 9 is a wiring diagram of an example of multiple independently connected connectors.

Referring to the annexed drawings, numeral 1 designates a chain of n electric connectors 2a, 2b, ... 2n of the independently connectable type, for independent actuation of a plurality n of electric points of use, such as solenoid valves 3a, 3b, ... 3n.

In the illustrated embodiment, the chain of connectors is designed to be connected to a "sequencing timer" which selectively actuates the electric points of use (in the preferred use, valve solenoids).

Typically, the number n f connectors in the chain is of eight to twelve.

Each connector 2a, 2b, ... 2n has a socket or header 9 for connection of an electric unit, such as a solenoid valve, and a generally box-like enclosure 12.

The socket 9 is connected to a printed circuit board 19 held within the connector 2.

All electric connectors 2a, 2b, ...2n are connected in series via a ground wire and via a neutral wire.

Each electric connector 2a, 2b, ...2n is in turn connected to a phase conductor that starts from the beginning of the chain.

Electric connectors are two-pin connectors (phase and neutral) and ground but have four contacts.

This arrangement affords maximum freedom of connector orientation relative to the units, such as an array of solenoid valves.

Electric connectors 2a, 2b, ...2n are sequentially connected by n sections of multipolar cable 4a, 4b, ...4n with wires (ground, neutral and phases) passing therein.

The first n-1 connectors 2a, 2b, ...2n-1 have an input 5 for a cable section and an output 6 for a cable section.

In the preferred embodiment, the input 5 and the output 6 of each connector have substantially and/or generally opposite orientations.

More preferably, the input 5 and the output 6 of these first n-1 connectors are substantially and/or generally aligned along one axis.

Opposed and aligned arrangement of the input and output of the multipolar cables of each connector along the same axis allows minimization of cable length and easier use of the chain of connectors and their connection with electric units, particularly when these are arranged along an axis, as is the case of solenoid valves of blow tubes of dust collector filters.

The last connector 2n of the chain only has one input.

In a possible embodiment, the n cable sections 4a, 4b, ...4n are co-molded with the enclosure of each electric connector 2a, 2b, ...2n.

Otherwise, tightness of input and output cables of each connector is obtained by cable glands or seals.

The pitch between electric connectors is dependent on needs.

Typically, the n electric connectors can have a pitch from 10 cm to 100 cm.

Each electric connector 2a, 2b, ...2n may further include light indicator means, typically a LED for indicating the presence of voltage in the connector and hence its proper operation.

## Claims

1. A chain of n independently connectable (1) electric connectors (2a, 2b, ...2n) for independent actuation of a plurality n of solenoid valves (3a, 3b, ... 3n), each electric connectors (2a, 2b, ...2n) having an enclosure (12a, 12b, ...12n), said electric connectors (2a, 2b, ...2n) being connected by n cable sections (4a, 4b, ...4n) and wherein each of the first n-2 connectors (2a, 2b, ...2n-1) has an input (5) for a cable section, said input (5) and said output (6) having substantiall6 and/or generally opposed orientations.

2. A chain of electric connectors as claimed in claim 1, wherein said input (5) and said output (6) of said first n-1 connectors are substantially and/or generally aligned along one axis.

3. A chain of electric connectors as claimed in claim 1 or 2, wherein said n cable sections (4a, 4b, ...4n) are co-molded with the enclosure of said n electric connectors (2a, 2b, ...2n).

4. A chain of electric connectors as claimed in claim 1 or 2, wherein said inputs (5) and said outputs (6) of said connectors (2a, 2b, ...2n) are equipped with cable glands or seals.

5. A chain of electric connectors as claimed in claim 1 or 2 or 3 or 4, wherein said n electric connectors have a pitch from 10 cm to 100 cm.

6. A chain of electric connectors as claimed in one of the preceding claims, wherein said electric connectors are of the two-pin and ground type but has four contacts.

7. A chain of electric connectors as claimed in any preceding claim, wherein each electric connector (2a, 2b, ..2n) comprise light-emitting means for indicating the presence of voltage in the connector.
